# EUROPÄISCHE PATENTSCHRIFT

(11) **EP 2 820 699 B1**
(45) Veröffentlichungstag und Bekanntmachung des Hinweises auf die Patenterteilung: **10.01.2018**
(21) Anmeldenummer: 13704977.1
(22) Anmeldetag: 21.02.2013
(51) Int. Cl.: H01M 4/04, H01M 4/139, H01M 4/62

(54) **KATHODE EINER LITHIUM-SCHWEFEL-BATTERIE UND LÖSUNGSMITTELFREIES VERFAHREN ZU DEREN HERSTELLUNG**
LITHIUM-SULFUR-BATTERY CATHODE AND SOLVENT-FREE METHOD FOR THE PRODUCTION THEREOF
CATHODE DE BATTERIE LITHIUM-SOUFRE ET PROCÉDÉ SANS SOLVANT POUR LA PRODUIRE

(30) Priorität: 28.02.2012 DE 102012203019
(43) Veröffentlichungstag der Anmeldung: 07.01.2015
(73) Patentinhaber: Fraunhofer Gesellschaft zur Förderung der angewandten Forschung e.V., 80686 München (DE)
(72) Erfinder: BRÜCKNER, Jan, 01307 Dresden (DE); TSCHÖCKE, Sebastian, 01309 Dresden (DE); ALTHUES, Holger, 01309 Dresden (DE); KASKEL, Stefan, 01159 Dresden (DE); THIEME, Sören, 01324 Dresden (DE)
(74) Vertreter: Maiwald Patentanwalts GmbH
(86) Internationale Anmeldenummer: PCT/EP2013/053438
(87) Internationale Veröffentlichungsnummer: WO 2013/127684

(56) Entgegenhaltungen:
- EP-A1- 2 306 563
- US-A1- 2003 205 835
- US-A1- 2006 246 343
- US-A1- 2007 008 677

## Beschreibung

Elektroden (Anoden und Kathoden) für Li-Ionen-Zellen werden überwiegend mittels Pasten- oder Schlicker-Beschichtungsverfahren hergestellt. Die Aktivmaterialien werden dabei als Pulver durch Zugabe eines Lösungsmittels (in der Regel n-Methylpyrrolidon), eines Binders und weiterer Additive in einen Schlicker überführt. Dieser kann über verschiedene Auftragungsverfahren wie Rakeln oder über Düsen auf Metallfolien aufgetragen werden.

Auch für neue Batterietechnologien wie Lithium-Schwefel-Systeme wird in der Regel auf diesen etablierten Verfahren aufgebaut. Bekannt ist die Verarbeitung der Ausgangskomponenten über Pasten und Schlicker auf der Basis von wässrigen oder organischen Lösungsmitteln. Danach erfolgt der Auftrag dieser Pasten oder Aufschlämmungen auf Stromkollektoren mittels Rakel oder Sprühtechnik. Nachteile dieser Verfahren sind die Verwendung eines giftigen, teuren und hochsiedenden organischen Lösungsmittels, ein aufwendiger Dispergierschritt und ein aufwendiger Trocknungsprozess. Bei der Verwendung von wässrigen Lösungen ist die Trocknung besonders wichtig, da in einer sekundären Lithiumbatterie Wasserrückstände heftig mit dem Leitsalz und/oder den Aktivmaterialien unter Bildung von explosiven (und toxischen) Gasen reagieren können. Auch ist zu berücksichtigen, dass hohe Temperaturen bei der Trocknung ein Sublimieren des Schwefels (d.h. des elektrochemisch aktiven Kathodenmaterials) bewirken können.
Für die großtechnische Herstellung von Elektrodenfolien stehen vor allem Produktionskosten, die Reproduzierbarkeit und die Stetigkeit des Produktionsprozesses im Vordergrund. Möglichst hohe Gießgeschwindigkeiten, kurze Trocknungszeiten und eine geringe Anfälligkeit des Schlickers bzw. der Gießmethode gegen Schwankungen in der Umgebungsatmosphäre (z.B. Temperatur, Feuchte) werden gefordert. Um den anvisierten Bedarf der Batteriehersteller zu decken, sind zur Steigerung der Produktivität sehr hohe Vorschubgeschwindigkeiten von größer 10 m/min unabdingbar. Damit sind lange Trocknungsstrecken von über 15 m notwendig.

Dokument US2006/0246343 offenbart ein Verfahren zur Herstellung einer Kathode für z.B. eine Lithium-Ionen Batterie, wobei eine lösungsmittelfreie Zusammensetzung enthaltend PTFE, ein elektrisch leitfähiges Kohlenstoffmaterial und gegebenenfalls auch das aktive Kathodenmaterial bereitgestellt wird und durch Scherkräfte fibrilliert wird. Die so erhaltende Zusammensetzung wird anschließend zu einer Kathodenfolie geformt. Es ist daher von Interesse, ein Herstellungsverfahren für Elektroden von Lithium-Schwefel-Zellen zu entwickeln, das ohne den Einsatz von Lösungsmitteln auskommt und dennoch zu Elektroden mit hohen Kapazitätswerten führt.
Mit einem solchen lösungsmittelfreien Verfahren ließen sich durch reduzierte Investitionskosten (Anlagen, Trocknerstrecken), verbesserte Energie-, Sicherheits- und Umweltaspekte, höhere Prozessgeschwindigkeiten, reduzierte Anzahl an Prozessschritten sowie Wegfall von Lösungsmittelkosten drastische Einsparungen realisieren.
Unter Berücksichtigung der obigen Ausführungen besteht eine Aufgabe der vorliegenden Erfindung darin, ein lösungsmittelfreies Verfahren für die Herstellung einer Kathode einer Lithium-Schwefel-Batterie bereit zu stellen. Die verbesserte Effizienz des Herstellungsverfahrens sollte jedoch nicht auf Kosten der Leistungsfähigkeit der Kathodeneinheit erzielt werden. Eine weitere Aufgabe der vorliegenden Erfindung besteht in der Bereitstellung einer Kathode einer Lithium-Schwefel Batterie, die über ein solches effizientes Herstellungsverfahren zugänglich ist und trotzdem eine hohe Leistungsfähigkeit aufweist.
Gemäß eines ersten Aspekts der vorliegenden Erfindung wird die Aufgabe gelöst durch ein Verfahren zur Herstellung einer Kathodenfolie einer Lithium-Schwefel Batterie, umfassend:
(i) Bereitstellung einer trockenen, lösungsmittelfreien Zusammensetzung, welche Polytetrafluorethylen, ein elektrisch leitfähiges, elektrochemisch inaktives Kohlenstoffmaterial und ein elektrochemisch aktives Kathodenmaterial umfasst,
(ii) Ausbildung von zumindest teilweise fibrilliertem Polytetrafluorethylen durch Einwirkung von Scherkräften auf die trockene, lösungsmittelfreie Zusammensetzung und Erhalt einer fibrillierten Zusammensetzung,
(iii) Umformen der fibrillierten Zusammensetzung zu einer Kathodenfolie.

Mit dem erfindungsgemäßen Verfahren ist ein aufwendiger Trocknungsschritt der Kathodenfolie nicht mehr erforderlich. Wie nachfolgend noch beschrieben wird, führt dieses effiziente Verfahren außerdem zu einer leistungsfähigen Kathode in Lithium-Schwefel Batterien. Hinsichtlich des in Schritt (i) zu verwendenden Polytetrafluorethylens ist wichtig, dass dieses unter Einwirkung von Scherkräften Fibrillen ausbilden kann. Dieses Phänomen sowie hierfür geeignetes Polytetrafluorethylen sind dem Fachmann grundsätzlich bekannt. Beispielhaft kann an dieser Stelle ein über Emulsionspolymerisation hergestelltes Polytetrafluorethylen mit hohem Molekulargewicht genannt werden.

Für die Bereitstellung der trockenen, lösungsmittelfreien Zusammensetzung in Schritt (i) kann pulverförmiges oder granuliertes Polytetrafluorethylen verwendet wird.

Alternativ kann für die Bereitstellung der trockenen, lösungsmittelfreien Zusammensetzung in Schritt (i) eine Polytetrafluorethylen-Suspension verwendet werden. Die PTFE-Suspension und das elektrisch leitfähige, elektrochemisch inaktive Kohlenstoffmaterial können miteinander vermengt und das flüssige Suspensionsmedium anschließend entfernt werden.

Bevorzugt wird das elektrisch leitfähige, elektrochemisch inaktive Kohlenstoffmaterial aus Ruß, porösen Kohlenstoffen, Kohlenstoffnanoröhren, Graphen, Graphit, Kohlenstofffasern oder deren Gemischen ausgewählt.

Geeignete Rußmaterialien als Leitadditive (z.B. als sogenannter "Leitruß") sind dem Fachmann grundsätzlich bekannt.

Im Rahmen der vorliegenden Erfindung wird der Begriff "Kohlenstoffnanoröhren" in seiner üblichen, dem Fachmann geläufigen Bedeutung verstanden und bezieht sich auf mikroskopisch kleine röhrenförmige Gebilde aus Kohlenstoff, die als aufgerollte Graphenschicht (einwandig) oder aus mehreren konzentrischen Röhren aus aufgerollten Graphenschichten (mehrwandig) verstanden werden kann bzw. können.

Die Länge der Kohlenstoffnanoröhren kann über einen breiten Bereich variieren. Als geeignete Länge kann in diesem Zusammenhang z.B. ein Bereich von 0,1 µm bis 1000 µm oder auch 0,1 µm bis 100 µm genannt werden.

Der Durchmesser der Nanoröhren kann z.B. im Bereich von 0,1-100 nm, bevorzugter 1-50 nm, besonders bevorzugt 5-20 nm liegen.

Im Rahmen der vorliegenden Erfindung wird der Begriff "Graphen" in seiner üblichen, dem Fachmann geläufigen Bedeutung verstanden und bezeichnet eine Modifikation des Kohlenstoffs mit zweidimensionaler Struktur, in der jedes Kohlenstoffatom von drei weiteren umgeben ist, so dass sich ein bienenwabenförmiges Muster ausbildet. Graphen kann beispielsweise in Form von Graphenflocken eingesetzt werden.
Der poröse Kohlenstoff wird bevorzugt aus Aktivkohle (wie z.B. Kugelkohle), einem aus Carbid hergestelltem Kohlenstoff (sog. "CDC": "Carbide-derived Carbon"), Kugelhohlkohle, oder deren Gemischen ausgewählt. Bei der Kugelhohlkohle ist templatassistiert oder templatfrei hergestellte Kugelhohlkohle besonders geeignet. Diese porösen Kohlenstoffe sind dem Fachmann bekannt und kommerziell erhältlich bzw. über bekannte Standardverfahren herstellbar.
Wird in die trockene, lösungsmittelfreie Zusammensetzung Kugelkohle eingebracht, so weist diese bevorzugt einen mittleren Partikeldurchmesser von 25 µm bis 125 µm auf.

Geeignete elektrochemisch aktive Kathodenmaterialien für Lithium-haltige Batterien sind dem Fachmann grundsätzlich bekannt.
Bei der Lithium-Schwefel-Batterie ist das elektrochemisch aktive Kathodenmaterial Schwefel oder Lithiumsulfid (Li₂S) oder ein Gemisch daraus. Bevorzugt werden das Polytetrafluorethylen, das elektrisch leitfähige, elektrochemisch inaktive Kohlenstoffmaterial und das elektrochemisch aktive Kathodenmaterial in Schritt (i) miteinander vermengt bzw. vermischt unter Erhalt der trockenen, lösungsmittelfreien Zusammensetzung.

Bei der Bereitstellung der trockenen, lösungsmittelfreien Zusammensetzung in Schritt (i) kann bereits eine intensive Vermengung bzw. Vermischung der Komponenten stattfinden, z.B. in einer Mühle wie einer Kugel- oder Mörsermühle oder einem Kalander. Allerdings findet diese Vermischung bevorzugt noch nicht unter Bedingungen statt, die eine Fibrillierung des Polytetrafluorethylens bewirken. Alternativ können in Schritt (i) die Komponenten nur lose miteinander vermengt werden und die intensive Vermischung erfolgt in Schritt (ii) unter Bedingungen, die dann auch die Ausbildung von Polytetrafluorethylen-Fibrillen bewirken.

In einer bevorzugten Ausführungsform können das elektrisch leitfähige, elektrochemisch inaktive Kohlenstoffmaterial und das elektrochemisch aktive Kathodenmaterial als Kompositmaterial eingebracht und mit dem Polytetrafluorethylen in Schritt (i) vermengt werden, um die trockene, lösungsmittelfreie Zusammensetzung zu erhalten.

Ein geeignetes Kompositmaterial kann beispielsweise dadurch erhalten werden, dass das aktive Kathodenmaterial auf die (innere oder äußere) Oberfläche des elektrisch leitfähigen Kohlenstoffmaterials aufgebracht wird. Alternativ ist es auch möglich, dass das elektrisch leitfähige Kohlenstoffmaterial auf die Oberfläche des aktiven Kathodenmaterials aufgebracht wird, z.B. in Form einer Beschichtung auf pulverförmigem oder granuliertem Kathodenmaterial.

Zur besseren Kontaktierung kann es bevorzugt sein, das elektrisch leitfähige, elektrochemisch inaktive Kohlenstoffmaterial und das elektrochemisch aktive Kathodenmaterial vorab zu vermischen oder das elektrochemisch aktive Kathodenmaterial auf der Oberfläche des leitfähigen Kohlenstoffmaterials abzuscheiden (z.B. einschmelzen bzw. infiltrieren) und anschließend das Polytetrafluorethylen hinzuzufügen, um die trockene, lösungsmittelfreie Zusammensetzung in Schritt (i) bereit zu stellen.

Beispielsweise kann das elektrochemisch aktive Kathodenmaterial wie z.B. der Schwefel geschmolzen oder in die Gasphase überführt werden und anschließend mit dem elektrisch leitfähigen Kohlenstoffmaterial in Kontakt gebracht werden, um so die elektrochemisch aktive Komponente auf der Oberfläche des leitfähigen Kohlenstoffmaterials abzuscheiden. Alternativ kann die elektrochemisch aktive Komponente mittels eines Lösungsmittels auf das leitfähige Kohlenstoffmaterial aufgebracht werden, wobei das Lösungsmittel anschließend wieder entfernt wird.

Wie oben ausgeführt, erfolgt in Schritt (ii) die Ausbildung von zumindest teilweise fibrilliertem Polytetrafluorethylen durch Einwirkung von Scherkräften auf die trockene, lösungsmittelfreie Zusammensetzung, wodurch eine fibrillierte Zusammensetzung erhalten wird.

Geeignete Behandlungsschritte zur Ausbildung von Polytetrafluorethylen-Fibrillen sind dem Fachmann grundsätzlich bekannt.

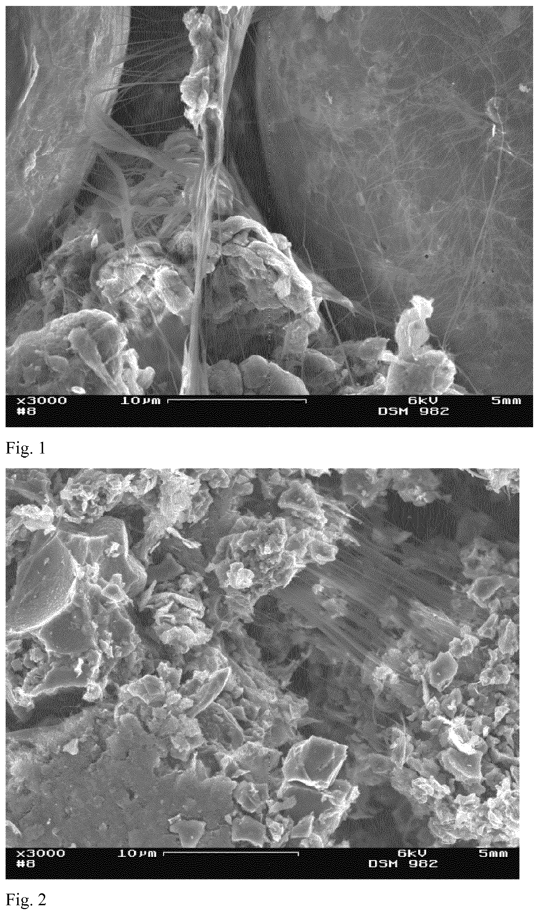

Anhand von Rasterelektronenmikroskopie-Aufnahmen lässt sich gut erkennen, ob aufgrund der eingebrachten Scherkräfte bereits Fibrillen ausgebildet wurden. Diese sind in der REM-Aufnahme als dünne Fäden gut erkennbar. Die Figuren 1 und 2 zeigen eine Zusammensetzung mit fibrilliertem Polytetrafluorethylen.

Im Rahmen der vorliegenden Erfindung wird unter einer fibrillierten Zusammensetzung eine Zusammensetzung verstanden, in der das Polytetrafluorethylen zumindest teilweise fibrilliert (d.h. in Form von Fibrillen) vorliegt.

Bevorzugt wird die Ausbildung von Polytetrafluorethylen-Fibrillen in Schritt (ii) durch eine Mahlbehandlung erreicht. Dabei können übliche Mahlvorrichtungen wie z.B. Kugel- oder Mörsermühlen verwendet werden.

Die Ausübung ausreichender Scherkräfte und die Ausbildung von PTFE-Fibrillen können beispielsweise auch durch Vermengen in einer Schneckenwelle, wie sie z.B. in einem Extruder vorliegt, realisiert werden.

Wie oben dargelegt, erfolgt in Schritt (iii) das Umformen der fibrillierten Zusammensetzung zu einer Kathodenfolie.

Um die fibrillierte Zusammensetzung in eine Folie zu überführen, können übliche, dem Fachmann bekannte Umformtechniken verwendet werden.

In einer bevorzugten Ausführungsform erfolgt das Umformen der fibrillierten Zusammensetzung zu einer Folie in Schritt (iii) durch Walzen. Dieses Auswalzen der fibrillierten Zusammensetzung kann in einem Kalander durchgeführt werden.

Das Umformen kann bei Raumtemperatur oder erhöhter Temperatur wie z.B. 50-150°C durchgeführt werden. Findet die Umformung bei Raumtemperatur statt, kann es vorteilhaft sein, wenn die Zusammensetzung einen Feststoff mit kugelförmiger Partikelmorphologie wie z.B. Kugelkohle enthält. Die Umformung bei erhöhter Temperatur (z.B. 50-150°C) kann im Falle des Auswalzens beispielsweise dadurch erfolgen, dass die Walzen geheizt werden.

Bevorzugt sollte beim Walzprozess kein großer Anpressdruck, sondern vielmehr ein Scherdruck herrschen.

Das Umformen der fibrillierten Zusammensetzung zur Kathodenfolie kann auch über einen Pressschritt (beispielsweise Heißpressen) oder Extrusion erfolgen. Wie nachfolgend noch erläutert wird, kann ein solcher Pressschritt gleichzeitig auch dazu verwendet werden, um die Folie auf einem Substrat anzubringen.

Zur besseren Verarbeitbarkeit in Schritt (iii) können der fibrillierten Zusammensetzung geeignete flüssige oder feste Prozessadditive zugegeben werden. Die Menge dieser Additive, bezogen auf die Gesamtmasse der Zusammensetzung, beträgt bevorzugt weniger als 20 Gew%, bevorzugter weniger als 10 Gew% oder sogar weniger als 5 Gew%. Das erfindungsgemäße Verfahren kann aber auch ohne Zugabe flüssiger oder fester Prozessadditive, insbesondere ohne flüssige Prozessadditive erfolgen.

Der Anteil des Polytetrafluorethylens in der Kathodenfolie kann über einen breiten Bereich variiert werden und liegt bevorzugt im Bereich von 2 Gew% bis 50 Gew%, bevorzugter von 3-20 Gew%, noch bevorzugter von 5-10 Gew%.

Bevorzugt liegt das elektrochemisch aktive Kathodenmaterial in der Kathodenfolie in einer Menge von 40 Gew% bis 90 Gew%, bevorzugter von 50-80 Gew% vor.

Im Fall einer Lithium-Ionen-Batterie kann es bevorzugt sein, dass das elektrochemisch aktive Kathodenmaterial in der Kathodenfolie in einer Menge von 40 Gew% bis 85 Gew%, bevorzugter von 60-80 Gew% vorliegt.

Im Fall einer Lithium-Schwefel-Batterie kann es bevorzugt sein, dass das elektrochemisch aktive Kathodenmaterial in der Kathodenfolie in einer Menge von 40 Gew% bis 90 Gew%, bevorzugter von 50-70 Gew% vorliegt.

Bevorzugt weist die durch das erfindungsgemäße Verfahren hergestellte Kathodenfolie eine Dicke im Bereich von 20-1000 µm, bevorzugter im Bereich von 50-500 µm, besonders bevorzugt 80-300 µm auf

In einer bevorzugten Ausführungsform ist die durch das erfindungsgemäße Verfahren erhaltene Kathodenfolie selbsttragend bzw. freistehend. Die selbsttragende Kathodenfolie kann aufgrund ihrer guten mechanischen Festigkeit und ihrer hohen Flexibilität unmittelbar in der Lithium-haltigen Batterie verwendet werden und muss nicht zusätzlich auf einem leitfähigen Substrat angebracht werden. In einer bevorzugten Ausführungsform wird daher die in Schritt (iii) erhaltene Kathodenfolie nicht mehr auf einem leitfähigem Substrat wie zum Beispiel einem Metallsubstrat oder Kohlenstoffsubstrat aufgebracht.

Alternativ kann es aber auch bevorzugt sein, dass die Kathodenfolie auf einem elektrisch leitfähigen Substrat, bevorzugt einem Metallsubstrat oder einem Kohlenstoffsubstrat (z.B. aus Kohlenstofffasern oder einem Kohlenstoffgewebe) aufgebracht wird.

Das Aufbringen der Kathodenfolie auf ein Substrat kann während des Schritts (iii), d.h. während des Umformens, erfolgen, beispielsweise durch Aufbringen der fibrillierten Zusammensetzung aus Schritt (ii) auf einem Substrat und anschließendem Verpressen unter Ausbildung der Kathodenfolie auf diesem Substrat.

Alternativ kann die in Schritt (iii) erhaltene freistehende bzw. selbsttragende Kathodenfolie nachträglich durch geeignete, dem Fachmann bekannte Verfahrensschritte auf einem Substrat aufgebracht werden.

Als geeignetes Metallsubstrat kann beispielsweise eine Metallfolie, Metallschaum (z.B. Nickel- oder Aluminiummetallschaum), ein Streckmetall, ein Lochmetall oder Lochblech, ein Metallgewebe, oder auch eine Kombination dieser metallischen Strukturen genannt werden. Dabei kann eine Kohlenstoffbeschichtung zur Verminderung des Kontaktwiderstandes und zur Verbesserung der Haftung verwendet werden.

Gemäß eines weiteren Aspekts der vorliegenden Erfindung wird die Aufgabe alternativ gelöst durch ein Verfahren zur Herstellung einer Kathodenfolie einer Lithium-Schwefel Batterie, umfassend:
(i) Bereitstellung einer trockenen, lösungsmittelfreien Zusammensetzung, welche Polytetrafluorethylen und ein elektrisch leitfähiges, elektrochemisch inaktives Kohlenstoffmaterial umfasst,
(ii) Ausbildung von zumindest teilweise fibrilliertem Polytetrafluorethylen durch Einwirkung von Scherkräften auf die trockene, lösungsmittelfreie Zusammensetzung und Erhalt einer fibrillierten Zusammensetzung,
(iii) Umformen der fibrillierten Zusammensetzung zu einer Folie, und
(iv) Einbringen eines elektrochemisch aktiven Kathodenmaterials in die Folie unter Erhalt einer Kathodenfolie.
In dieser alternativen Verfahrensvariante erfolgt das Einbringen des elektrochemisch aktiven Kathodenmaterials (z.B. des Schwefels) erst, nachdem eine Folie, die fibrilliertes Polytetrafluorethylen und das elektrisch leitfähige, elektrochemisch inaktive Kohlenstoffmaterial umfasst, hergestellt wurde.
Das Einbringen des elektrochemisch aktiven Kathodenmaterials wie z.B. des Schwefels in die in Schritt (iii) erhaltene Folie kann beispielsweise über die Schmelzphase oder Gasphase erfolgen. Dabei diffundiert das aktive Kathodenmaterial in die Folie ein, wodurch eine Kathodenfolie erhalten wird. Hinsichtlich der bevorzugten Eigenschaften des Polytetrafluorethylens, des elektrisch leitfähigen, elektrochemisch inaktiven Kohlenstoffmaterials sowie des elektrochemisch aktiven Kathodenmaterials kann auf die obigen Ausführungen verwiesen werden.
Auch hinsichtlich der bevorzugten Merkmale des Fibrillierungsschritts (ii) und des Umformschritts (iii) kann auf die obigen Ausführungen verwiesen werden.
Im Rahmen des erfindungsgemäßen Verfahrens ist es auch möglich, dass das elektrochemisch aktive Kathodenmaterial bereits in Schritt (i) eingebracht wird und eine zusätzliche Zuführung des aktiven Kathodenmaterials nach Schritt (iii) erfolgt.

Gemäß eines weiteren Aspekts der vorliegenden Erfindung wird eine Kathodenfolie einer Lithium-Schwefel Batterie bereitgestellt, diese Kathodenfolie umfassend:
- Polytetrafluorethylen, das zumindest teilweise fibrilliert ist,
- ein elektrisch leitfähiges, elektrochemisch inaktives Kohlenstoffmaterial,
- ein elektrochemisch aktives Kathodenmaterial.
Hinsichtlich der bevorzugten Eigenschaften des Polytetrafluorethylens, des elektrisch leitfähigen Kohlenstoffmaterials und des elektrochemisch aktiven Kathodenmaterials kann auf die obigen Ausführungen verwiesen werden.

Bevorzugt enthält die Kathodenfolie das zumindest teilweise fibrillierte Polytetrafluorethylen in einer Menge von 2 Gew% bis 50 Gew%, bevorzugter von 3 Gew% bis 20 Gew%, besonders bevorzugt von 5 Gew% bis 10 Gew%.
Bevorzugt enthält die Kathodenfolie das elektrisch leitfähige Kohlenstoffmaterial in einer Menge von 1 Gew% bis 55 Gew%, bevorzugter von 5 Gew% bis 35 Gew%. Bevorzugt enthält die Kathodenfolie das elektrochemisch aktive Kathodenmaterial in einer Menge von 40 Gew% bis 90 Gew%, bevorzugter von 50 Gew% bis 70 Gew%.

In einer bevorzugten Ausführungsform ist die Kathodenfolie freistehend bzw. selbsttragend, d.h. nicht auf einem leitfähigen Substrat, insbesondere nicht auf einem Metallsubstrat angebracht.

Alternativ kann es aber auch bevorzugt sein, dass die Kathodenfolie auf einem elektrisch leitfähigen Substrat, bevorzugt einem Metallsubstrat oder Kohlenstoffsubstrat, aufgebracht wird. Hinsichtlich der bevorzugten Eigenschaften dieses Metallsubstrats oder Kohlenstoffsubstrats kann auf die obigen Ausführungen verwiesen werden. In diesem Fall bilden dann die Kathodenfolie und das Substrat zusammen die Kathodeneinheit.

Bevorzugt wird die Kathodenfolie über das oben beschriebene Verfahren hergestellt bzw. ist über dieses Verfahren herstellbar.

Gemäß eines weiteren Aspekts der vorliegenden Erfindung wird eine Lithium-haltige Batterie bereitgestellt, die die oben beschriebene Kathodenfolie enthält.

Bevorzugt handelt es sich bei der Lithium-haltigen Batterie um eine Lithium-Schwefel-Batterie oder eine Lithium-Ionen-Batterie. Bezüglich weiterer Einzelheiten dieser Batterietypen kann auf die obigen Ausführungen verwiesen werden.

### Beispiele

### Beispiel 1

Es wurde folgende trockene, lösungsmittelfreie Ausgangszusammensetzung bereitgestellt:
0,450 g Aktivkohle (YP 50F, Kuraray Chemical Co., LTD) als poröses, leitfähiges Kohlenstoffmaterial,
0,450 g Schwefel als elektrochemisch aktives Kathodenmaterial,
0,050 g Leitruß (Super C65, TIMCAL Ltd. Group) als leitfähiges Kohlenstoffmaterial,
0,050 g Polytetrafluorethylen.

Die obigen Materialien werden in eine Mörsermühle aus Stahl gegeben (d.h. Bereitstellen der trockenen, lösungsmittelfreien Zusammensetzung). Durch ein zweiminütiges Vermahlen bei einem horizontalen und vertikalen Druck von 20 kg wird ein Fibrillieren des Polytetrafluorethylen bewirkt. Eine fibrillierte Zusammensetzung wird erhalten. Diese Zusammensetzung wird bei 155°C in einem Kalander auf eine Dicke von 150 µm ausgewalzt. Es wird eine selbsttragende bzw. freistehende Kathodenfolie erhalten.

Die guten mechanischen Eigenschaften dieser selbsttragenden Folie zeigen sich unter anderem daran, dass sie aufrollbar ist und ein Ausüben von horizontalen Ziehkräften ermöglicht. Vertikale Druckkräfte (z.B. beim Zellbau) bewirken keine Veränderung der Folie. Weiterhin ist die Folie ausstanzbar.

### Beispiel 2

Es wurde folgende trockene, lösungsmittelfreie Ausgangszusammensetzung bereitgestellt:
0,300 g Kugelkohle (TV 505, Blücher Adsor-Tech GmbH) als poröses, leitfähiges Kohlenstoffmaterial,
0,600 g Schwefel als elektrochemisch aktives Kathodenmaterial,
0,050 g Leitruß (SuperC65, TIMCAL Ltd. Group) als leitfähiges Kohlenstoffmaterial,
0,050 g Polytetrafluorethylen.

Die Herstellung einer selbsttragenden Kathodenfolie mit einer Dicke von 150 µm erfolgte analog den in Beispiel 1 beschriebenen Verfahrensschritten.

### Beispiel 3

Es wurde folgende trockene, lösungsmittelfreie Ausgangszusammensetzung bereitgestellt:
0,250 g Kugelkohle (TV 505, Blücher Adsor-Tech GmbH) als poröses, leitfähiges Kohlenstoffmaterial,
0,500 g Schwefel als elektrochemisch aktives Kathodenmaterial,
0,200 g Kohlenstoffhanoröhren (NC7000, Nanocyl) als leitfähiges Kohlenstoffmaterial,
0,050 g Polytetrafluorethylen.

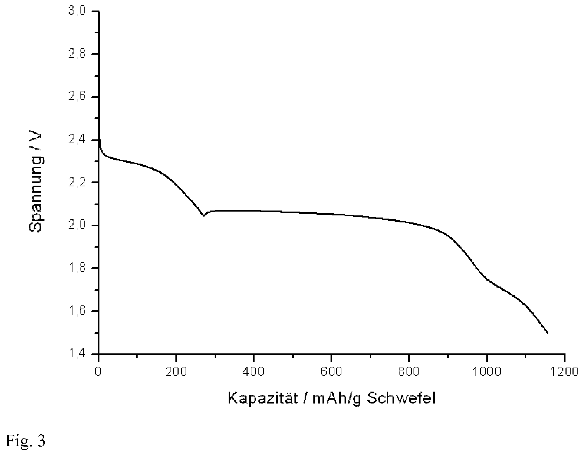

Die Herstellung einer selbsttragenden Kathodenfolie mit einer Dicke von 150 µm erfolgte analog den in Beispiel 1 beschriebenen Verfahrensschritten.
Mit der in Beispiel 3 hergestellten selbsttragenden Kathodenfolie wurde die Entladekurve des ersten Zyklus in einer Lithium-Schwefel-Batterie bestimmt. Diese ist in Figur 3 dargestellt. Es konnte ein hoher Entladekapazitätswert von 1150 mAh/g Schwefel ermittelt werden. Dies entspricht in etwa den Werten, die auch im Stand der Technik für Lithium-Schwefel-Batterien erzielt werden, siehe z.B. US 6,569,573.

### Beispiel 4

### (nicht gemäß der Erfindung)

Es wurde folgende trockene, lösungsmittelfreie Ausgangszusammensetzung bereitgestellt:
0,150 g Leitruß (SuperC65, TIMCAL Ltd. Group) als leitfähiges Kohlenstoffmaterial,
0,800 g LiFePO₄ (P2, Phostech Lithium Inc.) als elektrochemisch aktives Kathodenmaterial,
0,050 g Polytetrafluorethylen.

Die Herstellung einer selbsttragenden Kathodenfolie mit einer Dicke von 150 µm erfolgte analog den in Beispiel 1 beschriebenen Verfahrensschritten.

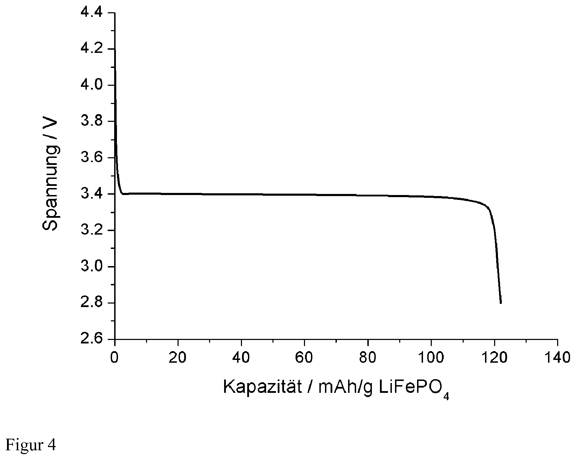

Mit der in Beispiel 4 hergestellten selbsttragenden Kathodenfolie wurde die Spannung als Funktion der Kapazität (mAh / g LiFePO₄) in einer LiFePO₄-Batterie bestimmt. Dies ist in Figur 4 dargestellt.

## Patentansprüche

1. Ein Verfahren zur Herstellung einer Kathodenfolie einer Lithium-Schwefel-Batterie, umfassend:
(i) Bereitstellung einer trockenen, lösungsmittelfreien Zusammensetzung, welche Polytetrafluorethylen, ein elektrisch leitfähiges, elektrochemisch inaktives Kohlenstoffmaterial und ein elektrochemisch aktives Kathodenmaterial umfasst,
(ii) Ausbildung von zumindest teilweise fibrilliertem Polytetrafluorethylen durch Einwirkung von Scherkräften auf die trockene, lösungsmittelfreie Zusammensetzung und Erhalt einer fibrillierten Zusammensetzung,
(iii) Umformen der fibrillierten Zusammensetzung zu einer Kathodenfolie.

2. Ein Verfahren zur Herstellung einer Kathodenfolie einer Lithium-Schwefel-Batterie, umfassend:
(i) Bereitstellung einer trockenen, lösungsmittelfreien Zusammensetzung, welche Polytetrafluorethylen und ein elektrisch leitfähiges, elektrochemisch inaktives Kohlenstoffmaterial umfasst,
(ii) Ausbildung von zumindest teilweise fibrilliertem Polytetrafluorethylen durch Einwirkung von Scherkräften auf die trockene, lösungsmittelfreie Zusammensetzung und Erhalt einer fibrillierten Zusammensetzung,
(iii) Umformen der fibrillierten Zusammensetzung zu einer Folie, und
(iv) Einbringen eines elektrochemisch aktiven Kathodenmaterials in die Folie unter Erhalt einer Kathodenfolie.

3. Das Verfahren nach Anspruch 1, wobei das Polytetrafluorethylen, das elektrisch leitfähige, elektrochemisch inaktive Kohlenstoffmaterial und das elektrochemisch aktive Kathodenmaterial in Schritt (i) miteinander vermengt werden unter Erhalt der trockenen, lösungsmittelfreien Zusammensetzung; oder wobei das elektrisch leitfähige, elektrochemisch inaktive Kohlenstoffmaterial und das elektrochemisch aktive Kathodenmaterial als Kompositmaterial eingebracht und mit dem Polytetrafluorethylen in Schritt (i) vermengt werden, um die trockene, lösungsmittelfreie Zusammensetzung zu erhalten.

4. Das Verfahren nach einem der vorstehenden Ansprüche, wobei das elektrisch leitfähige, elektrochemisch inaktive Kohlenstoffmaterial aus Ruß, porösen Kohlestoffen, Kohlenstoffnanoröhren, Graphen, Graphit, Kohlenstofffasern, oder deren Gemischen ausgewählt wird.

5. Das Verfahren nach einem der vorstehenden Ansprüche, wobei die Ausbildung des zumindest teilweise fibrillierten Polytetrafluorethylens in Schritt (ii) durch Mahlen, Vermengen in einer Schneckenwelle, oder Kombinationen davon erfolgt.

6. Das Verfahren nach einem der vorstehenden Ansprüche, wobei das Umformen der fibrillierten Zusammensetzung zu der Folie oder Kathodenfolie in Schritt (iii) durch Walzen, Pressen oder Extrusion erfolgt.

7. Das Verfahren nach einem der vorstehenden Ansprüche, wobei die in Schritt (iii) oder Schritt (iv) erhaltene Kathodenfolie selbsttragend ist.

8. Das Verfahren nach einem der Ansprüche 2 oder 4-7, wobei das Einbringen des elektrochemisch aktiven Kathodenmaterials in die Folie über die Schmelzphase oder Gasphase erfolgt.

9. Das Verfahren nach einem der vorstehenden Ansprüche, wobei das Polytetrafluorethylen in der Kathodenfolie in einer Menge von 2 Gew% bis 50 Gew% vorliegt; und/oder wobei das elektrochemisch aktive Kathodenmaterial in der Kathodenfolie in einer Menge von 40 Gew% bis 90 Gew% vorliegt.

10. Eine Kathodenfolie einer Lithium-Schwefel-Batterie, umfassend:
- Polytetrafluorethylen, das zumindest teilweise fibrilliert ist,
- ein elektrisch leitfähiges, elektrochemisch inaktives Kohlenstoffmaterial,
- ein elektrochemisch aktives Kathodenmaterial.

## Claims

1. Process for producing a cathode foil of a lithium-sulfur battery, which comprises:
(i) provision of a dry, solvent-free composition which comprises polytetrafluoroethylene, an electrically conductive, electrochemically inactive carbon material and an electrochemically active cathode material,
(ii) formation of at least partially fibrillated polytetrafluoroethylene by action of shear forces on the dry, solvent-free composition to give a fibrillated composition,
(iii) forming of the fibrillated composition to give a cathode foil.

2. Process for producing a cathode foil of a lithium-sulfur battery, which comprises:
(i) provision of a dry, solvent-free composition which comprises polytetrafluoroethylene and an electrically conductive, electrochemically inactive carbon material,
(ii) formation of at least partially fibrillated polytetrafluoroethylene by action of shear forces on the dry, solvent-free composition to give a fibrillated composition,
(iii) forming of the fibrillated composition to give a foil, and
(iv) introduction of an electrochemically active cathode material into the foil to give a cathode foil.

3. Process according to Claim 1, wherein the polytetrafluoroethylene, the electrically conductive, electrochemically inactive carbon material and the electrochemically active cathode material are blended with one another in step (i) to give the dry, solvent-free composition; or the electrically conductive, electrochemically inactive carbon material and the electrochemically active cathode material are introduced as composite material and blended with the polytetrafluoroethylene in step (i) in order to obtain the dry, solvent-free composition.

4. Process according to any of the preceding claims, wherein the electrically conductive, electrochemically inactive carbon material is selected from among carbon black, porous carbons, carbon nanotubes, graphene, graphite, carbon fibres and mixtures thereof.

5. Process according to any of the preceding claims, wherein the formation of the at least partially fibrillated polytetrafluoroethylene in step (ii) is carried out by milling, blending in a transport screw or combinations thereof.

6. Process according to any of the preceding claims, wherein the forming of the fibrillated composition to give the foil or cathode foil in step (iii) is carried out by rolling, pressing or extrusion.

7. Process according to any of the preceding claims, wherein the cathode foil obtained in step (iii) or step (iv) is self-supporting.

8. Process according to any of Claims 2 or 4-7, wherein the introduction of the electrochemically active cathode material into the foil is effected via the melt phase or gas phase.

9. Process according to any of the preceding claims, wherein the polytetrafluoroethylene is present in the cathode foil in an amount of from 2% by weight to 50% by weight; and/or the electrochemically active cathode material is present in the cathode foil in an amount of from 40% by weight to 90% by weight.

10. Cathode foil of a lithium-sulfur battery, comprising:
- polytetrafluoroethylene which has been at least partially fibrillated,
- an electrically conductive, electrochemically inactive carbon material,
- an electrochemically active cathode material.

## Revendications

1. Procédé de fabrication d'une feuille cathodique d'une batterie lithium-soufre, comprenant :
i) la préparation d'une composition sèche sans solvant, qui comprend du polytétrafluoroéthylène, une matière carbonée électrochimiquement inactive et électriquement conductrice, et une matière cathodique électrochimiquement active,
(ii) la formation de polytétrafluoroéthylène au moins partiellement fibrillé par application de forces de cisaillement sur la composition sèche sans solvant, et l'obtention d'une composition fibrillée,
(iii) le façonnage de la composition fibrillée en une feuille cathodique.

2. Procédé de fabrication d'une feuille cathodique d'une batterie lithium-soufre, comprenant :
i) la préparation d'une composition sèche sans solvant, qui comprend du polytétrafluoroéthylène et une matière carbonée électrochimiquement inactive et électriquement conductrice,
(ii) la formation de polytétrafluoroéthylène au moins partiellement fibrillé par application de forces de cisaillement sur la composition sèche sans solvant, et l'obtention d'une composition fibrillée,
(iii) le façonnage de la composition fibrillée en une feuille, et
(iv) l'introduction d'une matière cathodique électrochimiquement active dans la feuille pour obtenir une feuille cathodique.

3. Procédé selon la revendication 1, dans lequel le polytétrafluoroéthylène, la matière carbonée électrochimiquement inactive et électriquement conductrice, et la matière cathodique électrochimiquement active sont mélangés les uns avec les autres à l'étape (i) pour obtenir la composition sèche sans solvant ; ou la matière carbonée électrochimiquement inactive et électriquement conductrice et la matière cathodique électrochimiquement active sont introduites sous la forme d'une matière composite et mélangées avec le polytétrafluoroéthylène à l'étape (i) pour obtenir la composition sèche sans solvant.

4. Procédé selon l'une quelconque des revendications précédentes, dans lequel la matière carbonée électrochimiquement inactive et électriquement conductrice est choisie parmi le noir de carbone, les carbones poreux, les nanotubes de carbone, le graphène, le graphite, les fibres de carbone ou leurs mélanges.

5. Procédé selon l'une quelconque des revendications précédentes, dans lequel la formation du polytétrafluoroéthylène au moins partiellement fibrillé à l'étape (ii) a lieu par broyage, mélange dans un arbre à vis ou leurs combinaisons.

6. Procédé selon l'une quelconque des revendications précédentes, dans lequel le façonnage de la composition fibrillé en la feuille ou la feuille cathodique à l'étape (iii) a lieu par cylindrage, pressage ou extrusion.

7. Procédé selon l'une quelconque des revendications précédentes, dans lequel la feuille cathodique obtenue à l'étape (iii) ou à l'étape (iv) est autoportante.

8. Procédé selon l'une quelconque des revendications 2 ou 4 à 7, dans lequel l'introduction de la matière cathodique électrochimiquement active dans la feuille a lieu par le biais de la phase fondue ou de la phase gazeuse.

9. Procédé selon l'une quelconque des revendications précédentes, dans lequel le polytétrafluoroéthylène est présent dans la feuille cathodique en une quantité de 2 % en poids à 50 % en poids ; et/ou dans lequel la matière cathodique électrochimiquement active est présente dans la feuille cathodique en une quantité de 40 % en poids à 90 % en poids.

10. Feuille cathodique d'une batterie lithium-soufre, comprenant :
- du polytétrafluoroéthylène, qui est au moins partiellement fibrillé,
- une matière carbonée électrochimiquement inactive et électriquement conductrice,
- une matière cathodique électrochimiquement active.
